# EUROPEAN PATENT SPECIFICATION

(11) **EP 1 331 537 B1**
(45) Date of publication and mention of the grant of the patent: **03.08.2005**
(21) Application number: 03250141.3
(22) Date of filing: 09.01.2003
(51) Int. Cl.: G05D 1/03, A47L 11/40

(54) **Method and system for robot localization and confinement of workspace**
Verfahren und System zur Roboterlokalisierung und Beschränkung des Arbeitsbereichs
Methode et système pour localisation d'un robot et restriction de l'espace de travail

(30) Priority: 24.01.2002 US 56804
(43) Date of publication of application: 30.07.2003
(73) Proprietor: iRobot Corporation, Massachusetts 01803 (US)
(72) Inventor: Jones, Joseph L., Acton, Massachusetts 01720 (US); Mass, Philip R., Somerville, Massachusetts 02113 (US)
(74) Representative: Davies, Gregory Mark

(56) References cited:
- WO-A-00/38029
- US-A- 5 165 064
- GAT E: "Robust low-computation sensor-driven control for task-directed navigation" , PROCEEDINGS OF THE INTERNATIONAL CONFERENCE ON ROBOTICS AND AUTOMATION SACRAMENTO, APR. 9 - 11, 1991, LOS ALAMITOS, IEEE COMP. SOC. PRESS, US, VOL. VOL. 2 CONF. 7, PAGE(S) 2484-2489 XP010024107 ISBN: 0-8186-2163-X * page 2486, left-hand column, paragraph 4 *
- SCHOFIELD M: "Neither master nor slave.... A practical case study in the development and employment of cleaning robots" , EMERGING TECHNOLOGIES AND FACTORY AUTOMATION, 1999. PROCEEDINGS. ETFA '99. 1999 7TH IEEE INTERNATIONAL CONFERENCE ON BARCELONA, SPAIN 18-21 OCT. 1999, PISCATAWAY, NJ, USA,IEEE, US, PAGE(S) 1427-1434 XP010365760 ISBN: 0-7803-5670-5 * the whole document *

## Description

The invention relates to a method and system for robot localization and confinement.

There have been many systems proposed in the prior art for confining a robot to specific physical space for the purpose of performing work. These systems are typically designed for any number of robotic applications such as lawn care, floor cleaning, inspection, transportation, and entertainment, where it is desired to have a robot operate in a confined area for performing work over time.

By way of example, a vacuuming robot working in one room may unintentionally wander from one room to another room before satisfactorily completing the vacuuming of the first room. One solution is to confine the robot to the first room by closing all doors and physically preventing the robot from leaving the first room. In many houses, however, open passageways often separate rooms, and doors or other physical barriers cannot easily be placed in the robot's exit path. Likewise, a user may desire to only have the robot operate in a portion of a single open space and, therefore, letting the robot work in the entire room decreases efficiency.

It is therefore advantageous to have a means for confining the area in which a robot works.

One approach in the prior art is to provide sophisticated systems for navigation and orientation for the robot such that the robot either travels along a predetermined path and/or monitors its current location against a map stored in memory. These systems require sophisticated hardware, such as precision sensors and significant computer memory and computational power, and typically do not adapt well to changes in the area in which the robot is working. Likewise the robot cannot simply be taken from one building to another building, or even from room-to-room, without significant reprogramming or training.

For example, the method disclosed in U.S. Patent No. 4,700,427 (Knepper) requires a means for generating a path for the robot to travel, which can be either a manually-controlled teaching of the path or automatic mapping function. If "the place of use is frequently changed" or the "rooms are modified," large amounts of data memory is required in order to store information related to each location. Similarly, the method and system disclosed in U.S. Patent No. 4,119,900 (Kremnitz) requires powerful computation and sensors to constantly ascertain the orientation of the robot in a given space. Other examples of robotic systems requiring inputted information about the space in which the robot is working include methods and systems shown in U.S. Patent Nos. 5,109,566 (Kobayashi et al.) and 5,284,522 (Kobayashi et al.).

Similarly, certain prior art systems not only require the training or programming of the robot to the specifics of a particular space, but also require some preparation or alteration to the space in which the robot is to work. For example U.S. Patent no. 5,341,540 (Soupert et al.) discloses a system in which in a preferred embodiment requires the robot to include a positioning system and that the area for the robot be set up with "marking beacons ... placed at fixed reference points." While this system can avoid an unknown obstacle and return to its preprogrammed path through signals from the beacons, the system requires both significant user set-up and on-board computational power.

US 5165064 ((Mattaboni) also discloses a mobile robot employing one or more arrays of ultrasonic transducers which can be used with an infrared beacon system. Another device is shown in WO 00/38029 (Notetry Limited) and which discusses the use of threshold locators to confine a robot in a room. However like previous prior art, significant user set-up is required.

Similar systems and methods containing one or more of the above-described disadvantages are disclosed in U.S. Patent Nos. 5,353,224 (Lee et al.), 5,537,017 (Feiten et al.), 5,548,511 (Bancroft) and 5,634,237 (Paranjpe).

Yet another approach for confining a robot to a specified area involves providing a device defining the entire boundary of the area. For example, U.S. Patent No. 6,300,737 (Bergvall et al.) discloses an electronic bordering system in which a cable is placed on or under the ground to separate the inner area from the outer area. Likewise, the system disclosed in US Patent No. 6,255,793 (Peless et al.) requires installation of a metallic wire through which electricity flows to define a boarder. While these systems provide an effective means for confinement, they are difficult to install, are not portable from room-to-room, and can be unsightly or a tripping hazard if not placed under ground or beneath carpeting. Equally important, such systems can be difficult to repair if the wire or other confinement device breaks, as the location of such breaks can be difficult to determine when the system is placed underground or under carpet.

The present invention provides a modified and improved system for confining a robot to a given space without the drawbacks of prior art.

In accordance with the invention there is provided a robot confinement system as set out in claim 1.

Accordingly, the present invention has several objects and advantages.

It is an object of the invention to provide a simplified and portable system and method for confining a robot to a given area.

It is an object of the invention to provide a confinement system that does not require installation.

It is an object of the invention to provide a barrier system that can be set up intuitively and includes a means for visually indicating the barrier.

It is an additional object of the invention to provide a system such that a robot approaching the barrier from either side of the barrier will turn in such a way as to avoid crossing the barrier.

It is an object of the invention to provide a robot confinement system that operates regardless of the angle at which the robot approaches the barrier.

It is an additional object of a preferred embodiment of the invention to provide a system that is substantially impervious to the effects of sunlight, will not cause interference with other device, and will not be interfered by other devices.

The preferred embodiment of the present invention is for a robotic, indoor cleaning device similar to the types disclosed in the U.S. Patent Nos. 4,306,329 (Yokoi), 5,293,955 (Lee), 5,369,347 (Yoo), 5,440,216 (KKim), 5,613,261 (Kawakami et al.), 5,787,545 (Colens), 5,815,880 (Nakanishi), 6,076,226 (Reed). One of skill in the art will recognize that the present invention can be used in any number of robotic applications where confinement is desired. In addition, while the preferred embodiments described herein are for a robot without a navigation system, one of skill in the art will recognize the utility of the invention in applications using more sophisticated robots.

According to a further aspect of the invention, there is provided a robot confinement system as set out in Claim 15, wherein a control unit runs an algorithm that facilitates reversal of a robot.

According to yet a further aspect of the invention, there is provided a method of confining a robot as set out in Claim 16.

Other features and advantages of the invention will be apparent from the following detailed description, including he associated drawings, and from the claims.
Fig 1A shows an embodiment of the robot confinement system according to the invention with the barrier signal transmitter in an unpowered state; Figure 1B shows an embodiment of the robot confinement system according to the invention with the barrier signal transmitter in a powered state;
Figure 2A shows a schematic representation of a preferred embodiment of the barrier signal transmitter; Fig. 2B shows a circuit diagram of a specific embodiment of the barrier signal transmitter;
FIG. 3A shows a side-view schematic representation of a mobile robot used in a preferred embodiment of the invention; FIG. 3B shows a top-view schematic representation of a mobile robot used in a preferred embodiment of the invention;
FIG. 4 shows a side-view of a preferred embodiment of an omni-directional barrier signal detector;
FIG. 5 demonstrates a hardware block diagram of the robot shown in FIGS. 3A & 3B;
FIG. 6 shows a schematic representation of an alternative embodiment of the robot employing multiple barrier signal detectors;
FIGS. 7A & 7B are flow-chart illustrations of the barrier avoidance algorithm of a preferred embodiment of the invention;
FIGS. 8A-C are schematic illustrations of the system and method of a preferred embodiment of the present invention;
FIG. 9A-B are schematic illustrations of the system and method of an alternative embodiment of the present invention.

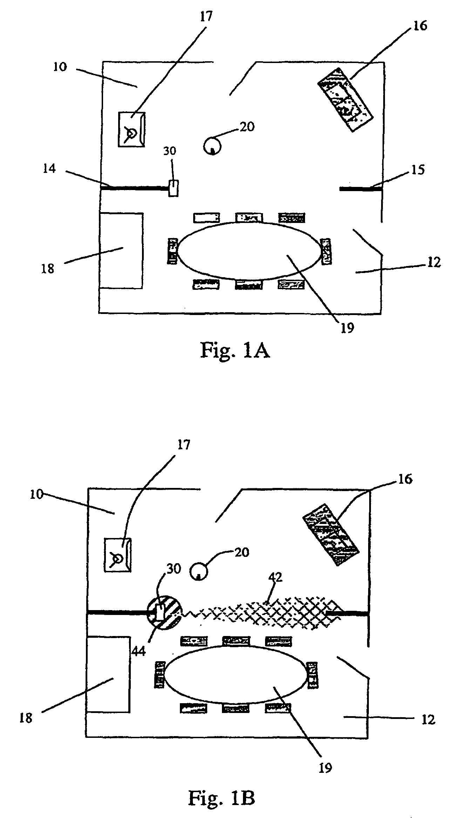

Referring to FIGS. 1A & 1B, living room 10 is shown separated from dining room 12 by interior walls 14 & 15. The living room and/or dining room may contain various furnishings, for example, couch 16, television 17, buffet 18 and table and chairs 19.

The rooms also contain a mobile robot 20 and a barrier signal transmitting device 30, which for purposes of this specification is also called a robot confinement (or RCON) transmitter 30. In FIGS. 1A & 1B, the robot is placed in the living room 10, and the RCON transmitter 30 is placed in the area dividing the living room 10 from the dining room 12, against interior wall 14 and pointing toward interior wall 15.

As described in more detail herein, FIG. 1B shows the same configuration of rooms with the RCON transmitter 30 in a powered state emitting, e.g., an infrared beam 42 from the RCON transmitter 30 toward interior wall 15. The beam 42 is directed primarily along an axis to create a boundary or barrier between living room 10 and dining room 12.

The system and method described herein each rely on a portable RCON transmitting unit 30 and a mobile robot 20. Each of these elements is first described independently, then the operation of a preferred embodiment of the invention is discussed.

### RCON Transmitter

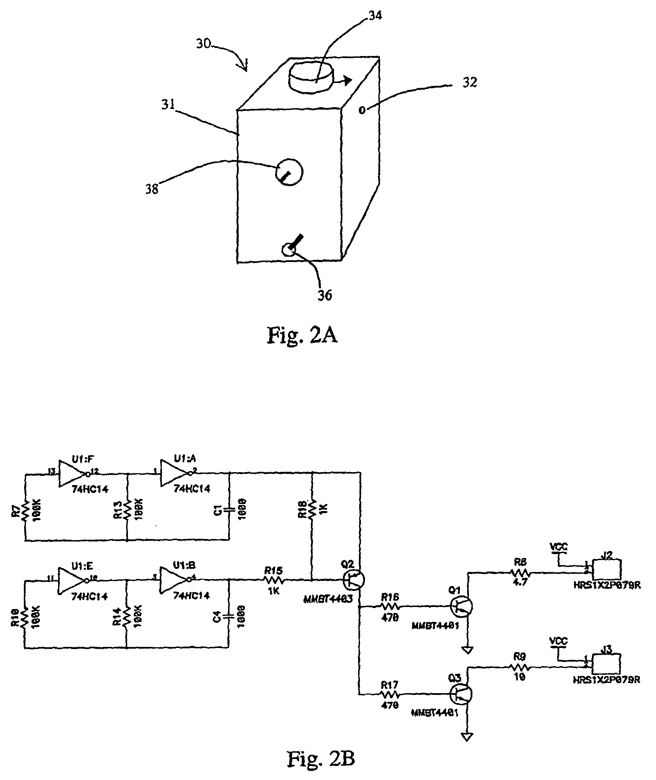

FIG. 2A illustrates a preferred embodiment of the RCON transmitter 30. The RCON transmitter 30 includes a first infrared emitter 32, a second infrared emitter 34, a power switch 36, and variable power-setting knob 38. The RCON transmitter enclosure 31 also houses the batteries (not shown) and necessary electronics for the various components. FIG 2B shows a circuit diagram for the necessary electronics for an embodiment of the RCON transmitter 30. Other embodiments may use other conventional power sources.

In the embodiment shown in FIG. 2A, a user would turn on the RCON transmitter 30 using power switch 36 at the same time as the robot 20 begins operation. The user can also select a variable power using knob 38. In other embodiments, any number of known input devices can be used to turn on the unit and/or select a power setting, such as keypads, toggle switches, etc. A higher power can be used to provide a longer barrier useful for dividing a single room, while a lower power setting can be used to provide a barrier for a single doorway. Because of the reflective properties of various materials such as walls painted white, it is preferable to limit the power of the RCON transmitter 30 to the minimum necessary to provide the desired barrier.

In alternative embodiments, the RCON transmitter's power may be automatically turned off after a predetermined amount of time in order to preserve battery life.

In alternative embodiments, a control system can be used to turn on and turn off one or more RCON transmitters and/or robots in order to allow automatic cleaning of multiple rooms or spaces in a controlled manner. For example, a "smart house" control system might communicate directly with one or more RCON transmitters allowing a cycling of work spaces. In the alternative, the robot 20 might send a signal to the RCON to turn it on.

In the preferred embodiment, two infrared emitters 32 & 34 are used. The first IR emitter 32 - the primary emitter - is powered to provide a directed barrier 42 of a given length from the RCON transmitter 30. In this embodiment, the beam 42 is a modulated, narrow IR beam. In the preferred embodiment, a collimated IR emitter is used such as Waitrony p/n IE-320H. The specifics of the emitter(s) are left to one of skill in the art; however, as explained in detail below, the beam 42 must have sufficient width. It is preferred that the minimum beam width be greater than the turning radius of the detector on a particular robot.

The second IR emitter 34 - the secondary emitter - is powered to provide a diffuse region 44 near the RCON transmitter 30 to prevent robot 20 from crossing the beam 42 in its most narrow region closest to the RCON transmitter 30 and, in addition, prevents robot 20 from coming into direct contact with the RCON transmitter 30. In the preferred embodiment, a lens identical to the lens portion of the RCON detector, described below, is used for the secondary emitter 34. In other embodiments, a single active emitter operatively connected to appropriate optics can be used to create multiple emission points, including the two emitter system disclosed herein.

Because of potential interference from sunlight and other IR sources, most IR devices, such as remote controls, personal digital assistances and other IR communication devices, modulate the emitted signal. Herein, the emitters 32 & 34 modulate the beam at 38 kHz. In addition, IR devices modulate the beam to provide a serial bit stream to the unit being controlled to tell it what to do. In an embodiment of the present invention, additional modulation of the beam at a frequency, for example 500 Hz, different from the frequency of common IR bit streams prevents interference with other IR equipment.

While the preferred embodiment uses an infrared signal, the system and method of the present invention can use other signals such as electromagnetic energy to accomplish the goals, including radio waves, X-rays, microwaves, etc. Many of these types of waves have significant drawbacks. For example, radio waves are more difficult and expensive to make directional, and visible light suffers from interference from many sources and may be distracting to users. Sound waves could also be used, but it is similarly difficult to make purely directional and tend to scatter and reflect more.

### Robot

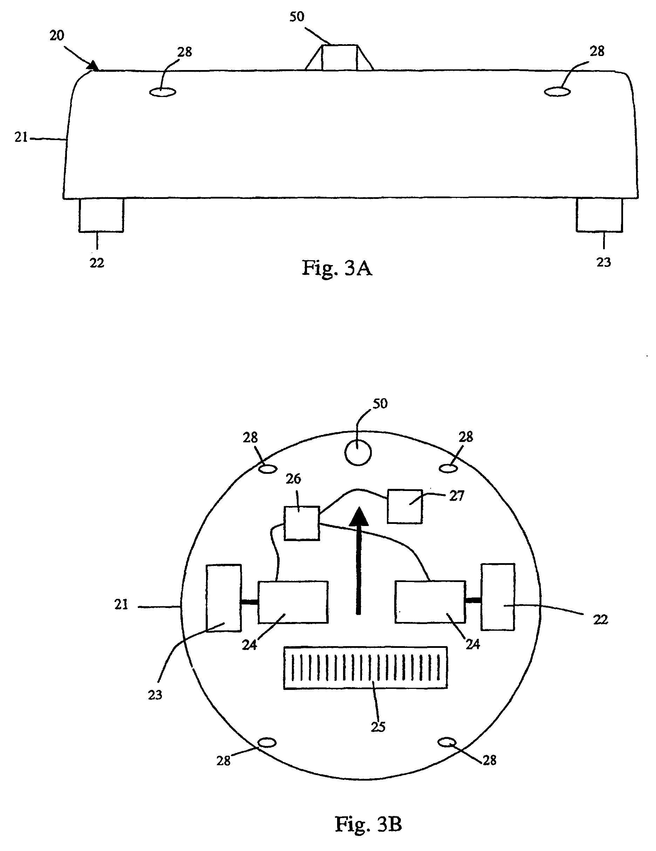

As shown in FIGS. 3A & 3B, in the preferred embodiment, the robot 20 comprises a substantially circular shell 21 mounted to a chassis containing two wheels 22 & 23 mounted on opposite sides of a center line, wherein each of the wheels 22 & 23 can be independently driven to allow the robot to turn. In the preferred embodiment, the wheels are mounted in such a manner as to allow the robot to turn substantially in place. The preferred embodiment of the robot 20 also comprises motors 24, cleaning mechanism 25, rechargeable battery 26, microprocessor 27, and various tactile and optical sensors 28.

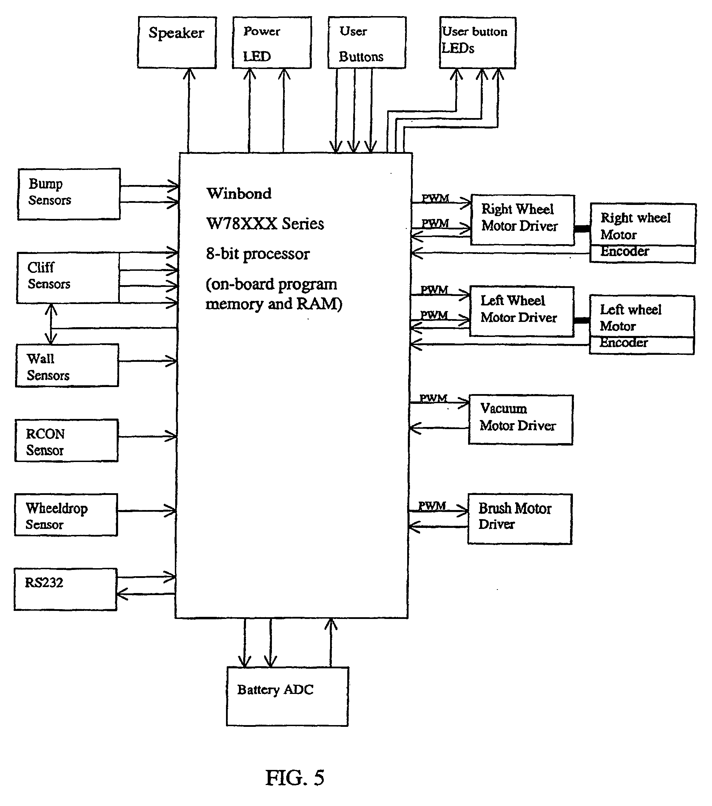

In FIG. 5 is illustrated a hardware block diagram of a robot similar to the one shown in FIGS. 3A & 3B. The hardware is built around a Winbond W78 XXX Series 8-bit processor. The processor is controlled by software stored in ROM. The system shown in FIG. 5 includes various control functions and motor drivers, along with various sensors (e.g. physical bump sensors, cliff sensors, the RCON detector/sensor).

For the instant invention, the robot also has an RCON detector 50, which in the preferred embodiment is a standard IR receiver module, which comprises a photodiode and related amplification and detection circuitry, mounted below an omni-directional lens, where omni-directional refers to a single plane. In a preferred embodiment, the IR receiver module is East Dynamic Corporation p/n IRM-8601S. However, any IR receiver module, regardless of modulation or peak detection wavelength, can be used as long as the RCON emitter is also changed to match the receiver. As shown in FIGS. 3A & 3B, the RCON detector is mounted at the highest point on the robot 20 and toward the front of the robot as defined by the primary traveling direction of the robot, as indicated by an arrow in FIG 3B.

While the RCON detector should be mounted at the highest point of the robot in order to avoid shadows, it is desirable in certain applications to minimize the height of the robot 20 and/or the RCON detector 50 to prevent operational difficulties and to allow the robot 20 to pass under furniture or other obstacles. In certain embodiments, the RCON detector 50 can be spring mounted to allow the detector to collapse into the body of the robot when the robot runs under a solid overhanging object.

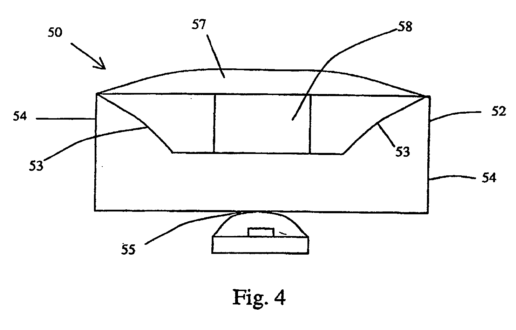

FIG. 4 shows in detail the preferred embodiment of the RCON detector 50. The RCON detector includes a lens 52 that allows in the barrier signal (or rays) 42 from all directions through the outer lens wall 54 and focuses the signal at focal point 55. At the same time, the method and systems of the present invention are likely to be used in the presence of sunlight. Because direct sunlight can easily saturate the IR detector 55, efforts may be made to exclude sunlight from the RCON detector 50. Therefore, in the preferred embodiment, opaque plastic horizontal plate 57 is used, which is supported by post 58.

The lens 52 used in the preferred embodiment is a primarily cylindrical device designed to accept rays perpendicular to the axis of the lens and to reject rays substantially above or substantially below the plane perpendicular to the axis of the lens. The lens focuses horizontal rays primarily on IR detector 55 mounted below the lens.

In the preferred embodiment, the geometry of the lens is determined by rotating a parabola about its focus, where the focus is collocated with the active element of the receiver 55. The inner lens wall 53 is thereby defined by the swept parabola. The rays are reflected by the phenomena called total internal reflection, defined here by the discontinuation between the lens material and the material internal to the inner lens wall 53. The preferred embodiment is constructed of clear polycarbonate chosen for its low cost and index of refraction.

The omni-directional nature of the RCON detector 50 allows a system with only a single RCON detector 50 to function equally well regardless of the angle of incident radiation from the RCON transmitter. If the RCON detector 50 is insensitive to the beams 42 & 44 from certain angles, then the robot 20 can break through the confining beams 42 & 44 when the robot 20 approaches the beam(s) such that the beam(s) occupies the RCON detector 50 blind spot.

In addition, in the preferred embodiment, the RCON transmitter 30 is battery powered. This imposes a high sensitivity requirement on the robot-mounted detector 50 in order to promote long battery life in the emitter 30. As such, the RCON detection system should be designed to gather as much IR as possible from the emitter(s).

The RCON detector of the preferred embodiment is designed to be triggered by modulated IR above a certain intensity threshold. If the IR levels are below the given threshold, the RCON detector computes no detection whatsoever and therefore triggers no specific control commands.

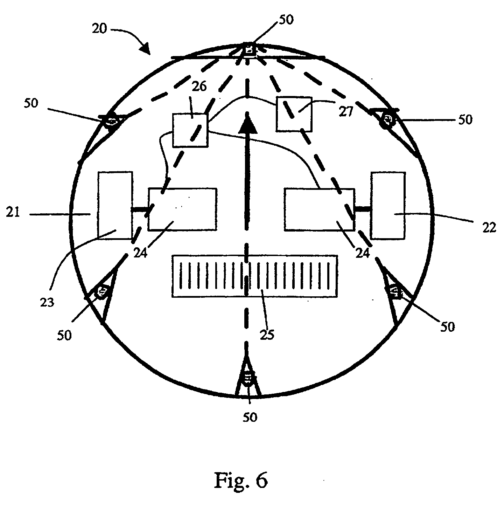

One of skill in the art will recognize that in alternative embodiments multiple RCON detectors 50 can be used. FIG. 6 illustrates such an embodiment using six side-mounted sensors 50. Each of the sensors should be oriented in a manner to have its field of view correspond to that of the single, top mounted sensor. Because a single, omni-directional RCON detector should be mounted at the highest point of the robot for optimal performance, it is possible to lower the profile of the robot by incorporating multiple detectors.

As disclosed above, the system and method of the present invention can be used with any number of robots existing in the prior art, including those designed for indoor cleaning applications.

### Operation of System & Method

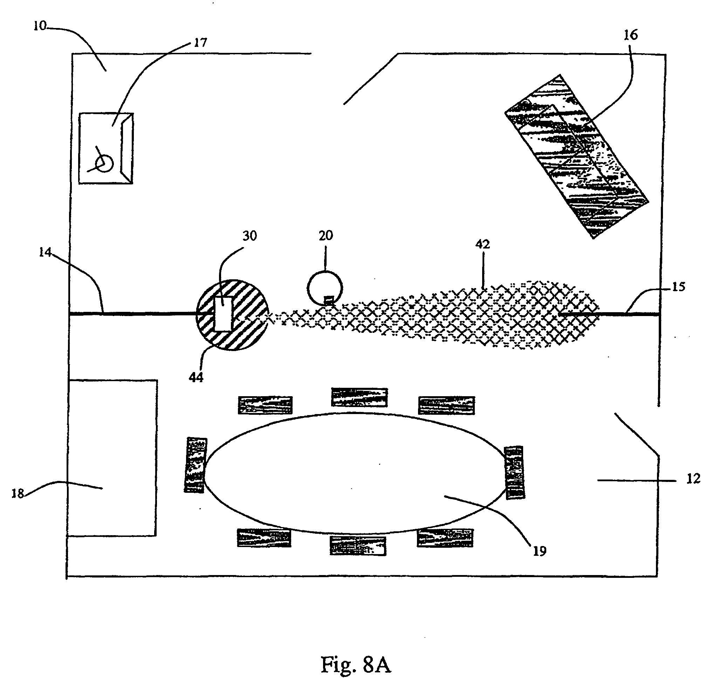

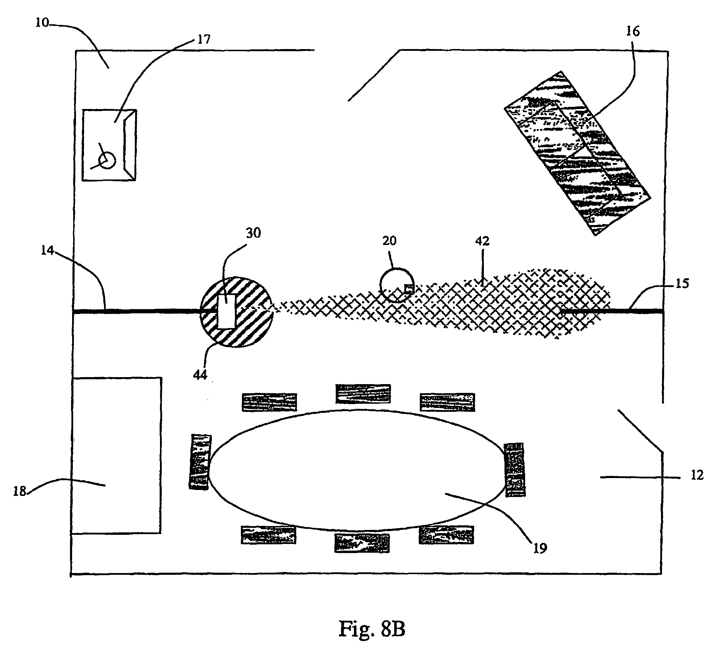

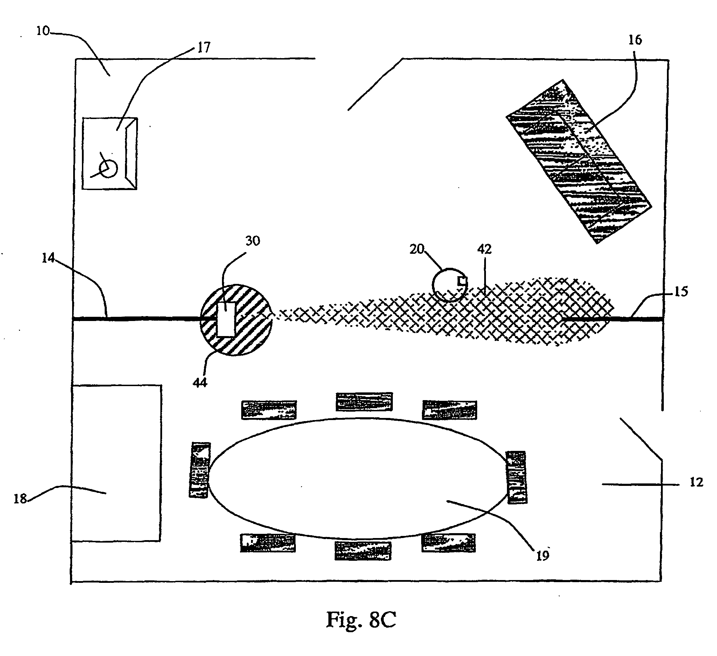

As shown in FIGS. 8A-C, an IR beam is used to divide the space (living room 10 and dining room 12) into two distinct areas. The robot has a sensor for detecting this beam 42 mounted at the robot's top front. As seen in FIG. 8B, whenever a measurable level of IR radiation strikes the detector the robot's IR avoidance behavior is triggered. In a preferred embodiment, this behavior causes the robot to spin in place to the left until the IR signal falls below detectable levels (FIG. 8C). The robot then resumes its previous motion. Spinning left is desired in certain systems because, by convention, the robot may attempts to keep all objects to its right during following operations. The robot's confinement behavior is consistent with its other behaviors if it spins left on detecting the confining beam 42. In this embodiment, the IR sensor acts as a gradient detector. When the robot encounters a region of higher IR intensity the robot spins in place. Because the IR sensor is mounted at the front of the robot and because the robot does not move backward, the sensor always sees the increasing IR intensity before other parts of the robot. Thus spinning in place causes the sensor to translate to a region of decreased intensity. When the robot next moves forward, following the sensor, the robot necessarily moves to a region of decreased IR intensity - away from the beam.

In another preferred embodiment, the room confinement behavior works as a single behavior in a strictly priority based behavior system which controls the robot's motion. Each of the behaviors is assigned a priority, and the behavior with the highest priority requests control of the robot at any given time and has full control of the robot. These behaviors may include driving forward, turning when bumped, spiraling, etc. The confinement behavior is one of the highest priority behaviors. It requests control of the robot when the room confinement IR sensor has detected a signal from a room confinement transmitter.

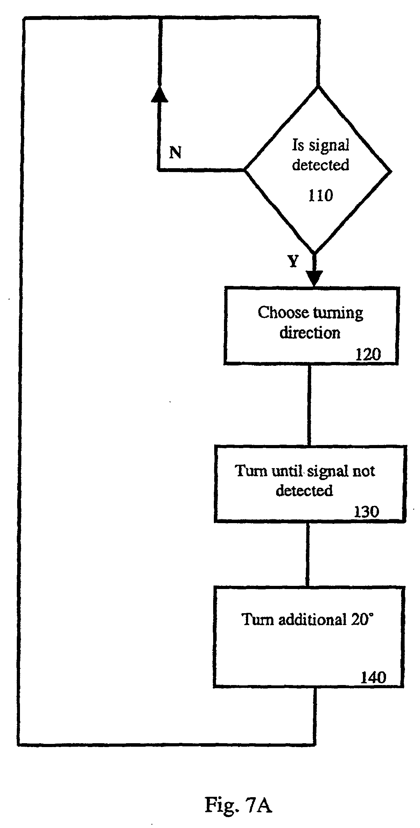

A flow-chart of a preferred embodiment of the control logic of the confinement behavior is shown in FIG. 7A. The robot determines whether the RCON detector detects a signal (step 110). If a signal is detected, the robot chooses a turning direction (step 120). The robot then begins to turn in the chosen direction until the signal is no longer detected (step 130). Once the signal is no longer detected, the robot continues turning for an additional distance (step 140).

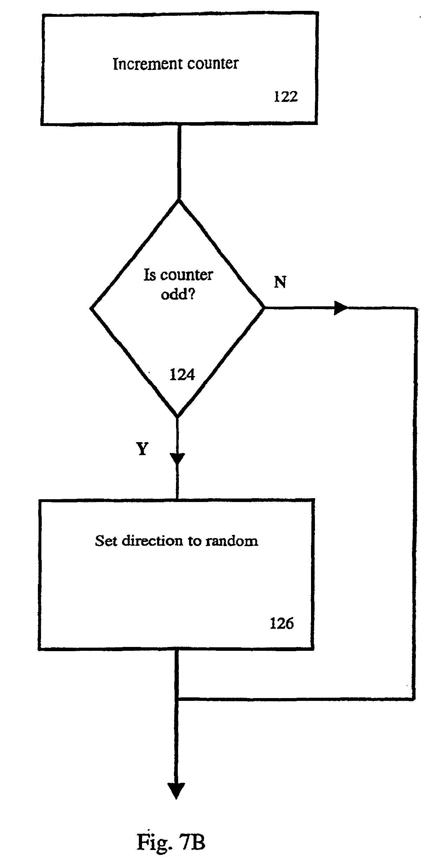

In the preferred embodiment of step 120, the direction is chosen through the algorithm illustrated in the flow chart shown in FIG. 7B. The robot's control logic keeps track of the robot's discrete interactions with the beam. The robot first increments the counter by one (step 122). On odd numbered interactions, the robot chooses a new turning direction randomly (steps 124 & 126); on even numbered interactions, the robot again uses its most recent turning direction.

In other embodiments, the robot can always turn a single direction or choose a direction randomly. When the robot always turns one direction, the robot may get stuck in a loop by turning away from the beam, bumping into another obstacle in a room, turning back toward the beam, seeing the beam again, turning away, bumping again, ad infinitum. Moreover, when the robot only turns in a single direction, it preferentially ends up at one end of the beam. Where the robot's task is to complete work evenly throughout a room, such as cleaning, a single turning direction is not optimal. If the direction is chosen purely randomly, the robot may turn back and forth quite a bit as it encounters the beam more than once.

In the preferred embodiment of step 140, the robot turns an additional 20 degrees from the point at which the signal is lost. The amount of the turn, which was selected arbitrarily in the preferred embodiment, is left to the particular robot and application. The additional turn prevents the robot from re-encountering the confinement beam immediately after exiting the beam. For various applications, the amount of additional movement (linear or turning) can be a predetermined distance or time, or in the alternative may include a random component.

In still other embodiments, the robot's avoidance behavior may include reversing the robot's direction until the beam 42 is no longer detected.

In other embodiments, the RCON detector is able to determine the gradient levels of the beam. This information can be used to send the robot in the direction of the lowest level of detection and prevent the situation where the robot is situated entirely within the beam and therefore turns in 360 degrees without the detector exiting the beam. In these embodiments, if the robot turns 360 degrees without exiting the beam, the control logic may give a higher priority to a "gradient behavior." The gradient behavior divides the possible robot headings into a fixed number of angular bins, each bin covering an equal sweep of the angular area around the robot. The robot then turns at a constant rate while sampling the number of detections in each angular bin. (For a system using infrared signals, detection counts are monotonically related to the signal strength.) After the robot has rotated more than 360 degrees, the gradient behavior commands the robot to turn toward the angular bin with the lowest detection count. When the robot achieves the correct heading, the gradient behavior commands the robot to move forward a predetermined distance, for example one-half of the width of the robot, then control is released from the gradient behavior. If necessary, this process repeats until the robot has moved into a region where IR intensity is below the detection threshold.

One of skill in the art will recognize that the emitter/detector system can also be used to guide the robot in any number of ways. For example, the beam 42 could be used to allow the robot to perform work parallel to the edge of the beam, allowing, for example, the floor right up to the edge of the room confinement beam to be cleaned.

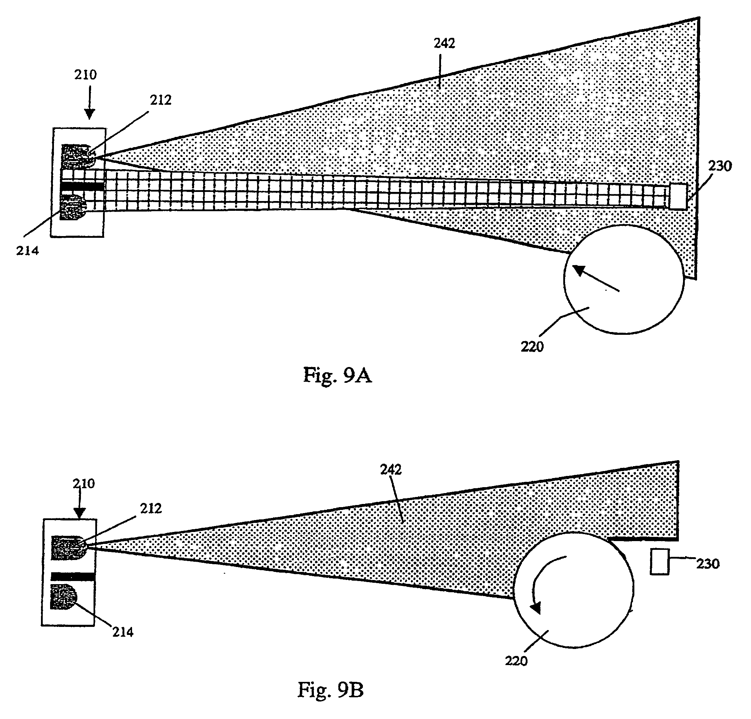

In an alternative embodiment of the present invention, the RCON transmitter may comprise both a signal emitter and a signal detector. As shown in FIG. 9A, the RCON transmitter 210 includes both a primary emitter 212 and a detector 214. The RCON transmitter 210 is placed at one end of the desired barrier and a retroreflector 230 is placed at the opposite end of the desired barrier. The retroreflector, which reflects the beam back toward the emitter regardless of the orientation of the retroreflector relative to the beam, can be constructed from, for example, standard bicycle reflectors. As shown in FIG. 9A, primary emitter 212 produces beam 242. A portion of beam 242 reflects from retroreflector 230 and is detected by detector 214.

In the embodiment shown in FIGS. 9A & 9B, the IR radiation emitted by the primary emitter 212 can be modulated in either of two ways constituting signal A or signal B. During normal operation, the beam 242 emitted from the primary emitter 212 is reflected by the retro-reflective material 230 back into the detector 214. When this is true the RCON transmitter broadcasts signal A, which is received by robot 220. As shown in FIG. 9B, if the robot or other object comes between the emitter 212 and the retro-reflective material 230 then no signal is returned to the receiver 214 and the RCON transmitter 210 broadcasts signal B, which is received by robot 220. The robot 220 then uses this information to improve its performance. The robot turns away from the beam as described previously only when the robot detects signal B. When the robot detects signal A no action is taken.

For certain applications, the embodiment shown in FIGS. 9A & 9B provides improved performance. For example, in cleaning application, the completeness of cleaning is improved because the robot tends to clean up to the line connecting the confinement device and the retro-reflective material. Also, this embodiment is more resistant to beam blockage. If furniture or other obstacles partially occlude the beam, the robot tends to turn away when it is further from crossing the beam. Finally, an indicator, such as an LED, can be added to the RCON transmitter to indicate when the device is functioning and correctly aimed.

In other embodiments, the RCON transmitter can be used to define an annular confinement region. For example, an RCON transmitter with two omni-directional emitters may be employed, wherein the first emitter would broadcast the standard modulated beam and the second emitter would a emit radiation 180 degrees out of phase with the output of the first emitter, but with less power. The robot would be programmed to turn when the IR was not detected. As the robot gets further from the emitter, it would eventually, lose the beam and turn back into it. As it gets closer, the radiation from the second emitter would jam the radiation from the first emitter, creating essentially unmodulated IR. The detector would fail to detect this, and the robot would again turn back into the annulus.

In yet another embodiment, the RCON transmitter can be used as a "home base." For example, once the voltage of the robot's battery drops below a predetermined level, the robot can use the gradient detection behavior to home in on the RCON transmitter. This allows the user to easily find the robot when it has finished cleaning instead of it randomly ending up in corners, under furniture, etc.

Although the description above contain many specificities, there should not be construed as limiting the scope of the invention but as merely providing illustrations of some of the presently preferred embodiments of this invention.

Other embodiments of the invention are within the scope of the following claims.

## Claims

1. A robot confinement system, comprising:
a. portable barrier signal transmitting device (30) that includes at least a primary emitter (32), **characterized in that** said primary emitter is operative to emit a collimated confinement beam (42) primarily along an axial length to create a directed barrier which divides an area into two distinct areas;
b. a mobile robot (20)
c. said mobile robot (20) comprising: means for turning in at least one direction; a detector (50) operative to detect said directed barrier formed by said emitted confinement beam (42); and a control unit controlling said means for turning;
d. whereby the control unit runs an algorithm for avoiding said directed barrier formed by said emitted confinement beam (42) upon detection of said directed barrier formed by said emitted confinement beam (42); said algorithm being operative to turn the robot in a chosen direction until said directed barrier formed by said emitted confinement beam (42) is no longer detected.

2. The robot confinement system of Claim 1, wherein said algorithm is further operative to continue to turn the robot (20) in the chosen direction at least a predetermined amount after said directed barrier formed by said emitted confinement beam (42) is no longer detected.

3. The robot confinement system of Claim 2, wherein said chosen direction of turning implemented by said algorithm is a generally clockwise or counterclockwise direction.

4. The robot confinement system of Claim 3, wherein said chosen direction of turning implemented by said algorithm is a random direction selection function.

5. The robot confinement system of Claim 4, wherein said chosen direction of turning implemented by said algorithm further comprises turning in the same direction at least twice before a final turning direction is chosen randomly.

6. The robot confinement system of Claim 3, wherein the generally clockwise or counterclockwise direction comprising the chosen direction of turning implemented by said algorithm is based upon detecting gradient levels of the directed barrier formed by said emitted confinement beam (42) at a plurality of orientations.

7. The robot confinement system of Claim 6 wherein the chosen direction of turning implemented by said algorithm is the direction with the smallest level for the emitted confinement beam (42).

8. The robot confinement system of Claim 1, wherein said portable barrier signal transmitting device (30) further comprises a secondary emitter (34) wherein the primary emitter (32) is operative to transmit a collimated confinement beam (42) to form said directed barrier and the secondary emitter (34) is operative to transmit a substantially omni-directional beam.

9. The robot confinement system of Claim 1, wherein the directed barrier formed by said emitted confinement beam (42) emitted by said primary emitter (32) is a modulated signal in an infrared frequency.

10. The robot confinement system of Claim 9, wherein operation of said directed barrier detector (50) is substantially omni-directional.

11. The robot confinement system of Claim 10, wherein said mobile robot (20) includes a shell (21) and wherein said directed barrier detector (50) is located on top of the shell (21) of said robot (20) such that operation of said directed barrier detector (50) is not substantially affected by the shell (21) of said robot.

12. The robot confinement system of Claim 1, where said robot (20) further comprises a plurality of detectors for said directed barrier.

13. The robot confinement system of Claim 1 wherein said portable barrier signal transmitting device (30) further comprises a reflection detector, wherein said primary emitter (32) is operative to emit at least first and second confinement beams (42), said primary emitter (32) being operative to emit the second confinement beam (42) upon failure of said reflection detector to detect the first emitted confinement beam (42).

14. The robot confinement system of Claim 1, wherein the robot (20) has a predetermined turning radius, and wherein said directed barrier formed by said emitted confinement beam (42) has a width as least as wide as the turning radius of the robot.

15. A robot confinement system comprising:
a) a portable barrier signal transmitting device (30) that includes at least a primary emitter (32) **characterized in that** said primary emitter is operative to emit a collimated confinement beam (42) primarily along an axis, said axis of said emitted confinement beam (42) defining a directed barrier;
b) a mobile robot (20)
c) said mobile robot (20) comprising: means for turning in at least one direction; a detector (50) operative to detect said directed barrier formed by said emitted confinement beam (42); and a control unit controlling said means for turning;
d) whereby the control unit runs an algorithm for avoiding said directed barrier formed by said emitted confinement beam (42) upon detection of said directed barrier formed by said emitted confinement beam (42) said algorithm being operative to reverse direction at which the robot (20) most recently travelled until said directed barrier formed by said emitted confinement beam (42)is no longer detected.

16. A method of confining a robot (20) using a directed barrier, comprising the steps of:
a) providing a portable barrier signal transmitting device (30) that includes a primary emitter **characterized in that** said primary emitter (32) is operative to emit a collimated confinement beam (42) along an axis to provide said directed barrier that is primarily linear and which can divide an area into two distinct areas.
b) providing a sensor positioned on the robot (20) said sensor being operative to detect said directed barrier formed by said emitted confinement beam (42)
c) providing mobility means on the robot, such that the robot can turn in at least one direction;
d) avoiding said directed barrier formed by said emitted confinement beam (42) upon detection of said directed barrier formed by said emitted confinement beam (42) by said sensor by implementing an algorithm to move the robot in a chosen direction.

17. The method according to Claim 16, wherein said directed barrier formed by said emitted confinement beam (42) emitted by said primary emitter is a modulated signal in an infrared frequency.

18. The method according to Claim 17, wherein operation of said directed barrier sensor is substantially omni-directional.

19. The method according to Claim 18, wherein the robot (20) has a predetermined turning radius and wherein said directed barrier formed by said emitted confinement (42) beam has a width at least as wide as the turning radius of the robot (20).

## Patentansprüche

1. Roboterarbeitsbereichbeschränkungssystem, umfassend:
a. eine tragbare Schrankensignalaussendevorrichtung (30), die mindestens einen primären Sender (32) umfasst, **dadurch gekennzeichnet, dass** der primäre Sender so wirkt, dass er einen parallel gerichteten Beschränkungsstrahl (42) primär entlang einer axialen Länge aussendet, um eine gerichtete Schranke zu schaffen, die einen Bereich in zwei verschiedene Bereiche aufteilt;
b. einen beweglichen Roboter (20);
c. wobei der bewegliche Roboter (20) umfasst: eine Einrichtung, um sich in mindestens einer Richtung zu drehen; einen Sensor (50), der so wirkt, dass er die gerichtete Schranke erfasst, die von dem ausgesendeten Beschränkungsstrahl (42) errichtet wurde; und eine Steuereinheit, welche die Einrichtung zum Drehen steuert;
d. wobei die Steuereinheit einen Algorithmus ablaufen lässt, um die gerichtete Schranke, die vom ausgesendeten Beschränkungsstrahl (42) errichtet wurde, bei Erfassung der gerichteten Schranke, die vom ausgesendeten Beschränkungsstrahl (42) errichtet wurde, zu umgehen; wobei der Algorithmus so wirkt, dass er den Roboter in eine ausgewählte Richtung dreht, bis die gerichtete Schranke, die vom ausgesendeten Beschränkungsstrahl (42) errichtet wurde, nicht mehr erfasst wird.

2. Roboterarbeitsbereichsbeschränkungssystem nach Anspruch 1, bei dem der Algorithmus darüber hinaus so wirkt, dass der Roboter (20) zumindest um einen bestimmten Betrag weiter in die ausgewählte Richtung gedreht wird, nachdem die gerichtete Schranke, die vom ausgesendeten Beschränkungsstrahl (42) errichtet wurde, nicht mehr erfasst wurde.

3. Roboterarbeitsbereichsbeschränkungssystem nach Anspruch 2, bei dem die ausgewählte Drehrichtung, die vom Algorithmus implementiert wird, im Allgemeinen im Uhrzeiger- oder Gegenuhrzeigersinn ist.

4. Roboterarbeitsbereichsbeschränkungssystem nach Anspruch 3, bei dem die ausgewählte Drehrichtung, die vom Algorithmus implementiert wird, eine Zufallsrichtungsauswahlfunktion ist.

5. Roboterarbeitsbereichsbeschränkungssystem nach Anspruch 4, bei dem die ausgewählte Drehrichtung, die vom Algorithmus implementiert wird, darüber hinaus umfasst, mindestens zweimal in dieselbe Richtung zu drehen, bevor die endgültige Drehrichtung zufällig ausgewählt wird.

6. Roboterarbeitsbereichsbeschränkungssystem nach Anspruch 3, bei dem der allgemeine Uhrzeiger- oder Gegenuhrzeigersinn, der die durch den Algorithmus implementierte Drehrichtung umfasst, auf der Erfassung von Gradientenpegeln der gerichteten Schranke, die vom ausgesendeten Beschränkungsstrahl (42) errichtet wurde, in einer Vielzahl von Ausrichtungen basiert.

7. Roboterarbeitsbereichsbeschränkungssystem nach Anspruch 6, bei dem die ausgewählte Drehrichtung, die vom Algorithmus implementiert wird, die Richtung mit dem geringsten Pegel des ausgesendeten Beschränkungsstrahls (42) ist.

8. Roboterarbeitsbereichsbeschränkungssystem nach Anspruch 1, bei dem die tragbare Schrankensignalaussendevorrichtung (30) darüber hinaus einen sekundären Sender (34) umfasst, bei dem der primäre Sender (32) so wirkt, dass er einen parallel gerichteten Beschränkungsstrahl (42) aussendet, um die gerichtete Schranke zu errichten, und der sekundäre Sender (34) so wirkt, dass er einen im Allgemeinen allseitig gerichteten Strahl aussendet.

9. Roboterarbeitsbereichsbeschränkungssystem nach Anspruch 1, bei dem die gerichtete Schranke, die vom ausgesendeten Beschränkungsstrahl (42) errichtet wurde, der vom ersten Sender (32) ausgesendet wurde, ein moduliertes Signal in einer Infrarotfrequenz ist.

10. Roboterarbeitsbereichsbeschränkungssystem nach Anspruch 9, bei dem der Betrieb des Richtschrankensensors (50) im Wesentlichen allseitig gerichtet ist.

11. Roboterarbeitsbereichsbeschränkungssystem nach Anspruch 10, bei dem der bewegliche Roboter (20) ein Gehäuse (21) umfasst, und bei dem sich der Richtschrankensensor (50) oben auf dem Gehäuse (21) des Roboters (20) befindet, so dass der Betrieb des Richtschrankensensors (50) vom Gehäuse (21) des Roboters im Wesentlichen nicht beeinträchtigt ist.

12. Roboterarbeitsbereichsbeschränkungssystem nach Anspruch 1, bei dem der Roboter (20) darüber hinaus mehrere Sensoren für die gerichtete Schranke umfasst.

13. Roboterarbeitsbereichsbeschränkungssystem nach Anspruch 1, bei dem die tragbare Schrankensignalaussendevorrichtung (30) darüber hinaus einen Reflexionssensor umfasst, bei dem der primäre Sender (32) so wirkt, dass er mindestens einen ersten und einen zweiten Beschränkungsstrahl (42) aussendet, wobei der primäre Sender (32) so wirkt, dass er den zweiten Beschränkungsstrahl (42) aussendet, wenn der Reflexionssensor den ersten ausgesendeten Beschränkungsstrahl (42) nicht erfassen konnte.

14. Roboterarbeitsbereichsbeschränkungssystem nach Anspruch 1, bei dem der Roboter (20) einen vorbestimmten Drehradius hat, und bei dem die gerichtete Schranke, die durch den ausgesendeten Beschränkungsstrahl (42) errichtet wurde, eine Breite hat, die zumindest so breit ist wie der Drehradius des Roboters.

15. Roboterarbeitsbereichbeschränkungssystem, umfassend:
a. eine tragbare Schrankensignalaussendevorrichtung (30), die mindestens einen primären Sender (32) umfasst, **dadurch gekennzeichnet, dass** der primäre Sender so wirkt, dass er einen parallel gerichteten Beschränkungsstrahl (42) primär entlang einer Achse aussendet, wobei die Achse des ausgesendeten Beschränkungsstrahls (42) eine gerichtete Schranke festlegt;
b. einen beweglichen Roboter (20);
c. wobei der bewegliche Roboter (20) umfasst: eine Einrichtung, um in mindestens einer Richtung zu drehen; einen Sensor (50), der so wirkt, dass er die gerichtete Schranke erfasst, die von dem ausgesendeten Beschränkungsstrahl (42) errichtet wurde; und eine Steuereinheit, welche die Einrichtung zum Drehen steuert;
d. wobei die Steuereinheit einen Algorithmus ablaufen lässt, um die gerichtete Schranke, die vom ausgesendeten Beschränkungsstrahl (42) errichtet wurde, bei Erfassung der gerichteten Schranke, die vom ausgesendeten Beschränkungsstrahl (42) errichtet wurde, zu umgehen, wobei der Algorithmus so wirkt, dass er die Richtung, in die sich der Roboter (20) zuletzt bewegte, umkehrt, bis die gerichtete Schranke, die vom ausgesendeten Beschränkungsstrahl (42) errichtet wurde, nicht mehr erfasst wird.

16. Verfahren zum Beschränken des Arbeitsbereichs eines Roboters (20) unter Verwendung einer gerichteten Schranke, das die folgenden Schritte umfasst:
a) Bereitstellen einer tragbaren Schrankensignalaussendevorrichtung (30), die einen primären Sender (32) umfasst, **dadurch gekennzeichnet, dass** der primäre Sender (32) so wirkt, dass er einen parallel gerichteten Beschränkungsstrahl (42) entlang einer Achse aussendet, um eine gerichtete Schranke bereitzustellen, die primär linear ist und einen Bereich in zwei verschiedene Bereiche aufteilen kann;
b) Bereitstellen eines am Roboter (20) angeordneten Sensors, wobei der Sensor so wirkt, dass er die gerichtete Schranke erfasst, die vom ausgesendeten Beschränkungsstrahl (42) errichtet wurde;
c) Vorsehen von Beweglichkeitseinrichtungen am Roboter, so dass sich der Roboter in zumindest eine Richtung drehen kann;
d) Umgehen der gerichteten Schranke, die vom ausgesendeten Beschränkungsstrahl (42) errichtet wurde, beim Erfassen der gerichteten Schranke durch den Sensor, die vom ausgesendeten Beschränkungsstrahl (42) errichtet wurde, indem ein Algorithmus implementiert wird, um den Roboter in eine ausgewählte Richtung zu bewegen.

17. Verfahren nach Anspruch 16, wobei die gerichtete Schranke, die, die vom ausgesendeten Beschränkungsstrahl (42) errichtet wurde, der vom ersten Sender ausgesendet wurde, ein moduliertes Signal in einer Infrarotfrequenz ist.

18. Verfahren nach Anspruch 17, wobei der Betrieb des Richtschrankensensors im Wesentlichen allseitig gerichtet ist.

19. Verfahren nach Anspruch 18, wobei der Roboter (20) einen vorbestimmten Drehradius hat, und bei dem die gerichtete Schranke, die durch den ausgesendeten Beschränkungsstrahl (42) errichtet wurde, eine Breite hat, die zumindest so breit ist wie der Drehradius des Roboters (20).

## Revendications

1. Système de confinement de robot, comprenant :
a) un dispositif (30) portable émetteur de signal de barrière qui comporte au moins un émetteur primaire (32), **caractérisé en ce que** ledit émetteur primaire est susceptible d'émettre un faisceau (42) de confinement collimaté principalement le long d'une longueur axiale pour créer une barrière orientée qui divise une zone en deux zones distincte ;
b) un robot mobile (20) ;
c) ledit robot (20) mobile comprenant : un moyen pour tourner dans au moins une direction ; un détecteur (50) susceptible de détecter ladite barrière orientée formée par ledit faisceau (42) de confinement émis ; et une unité de commande commandant ledit moyen pour tourner ;
d. système dans lequel l'unité de commande fait tourner un algorithme pour éviter ladite barrière orientée formée par ledit faisceau (42) de confinement émis lors de la détection de ladite barrière orientée formée par ledit faisceau (42) de confinement émis ; ledit algorithme étant susceptible de faire tourner le robot dans une direction choisie jusqu'à ce que ladite barrière orientée formée par ledit faisceau (42) de confinement émis ne soit plus détectée.

2. Système de confinement de robot selon la revendication 1, dans lequel ledit algorithme est en outre susceptible de continuer à faire tourner le robot (20) dans la direction choisie d'au moins une quantité prédéterminée après que ladite barrière orientée formée par ledit faisceau (42) de confinement émis ne soit plus détectée.

3. Système de confinement de robot selon la revendication 2, dans lequel ladite direction choisie pour tourner qui est implémentée par ledit algorithme est une direction générale dans le sens des aiguilles d'une montre ou dans le sens contraire des aiguilles d'une montre.

4. Système de confinement de robot selon la revendication 3, dans lequel ladite direction choisie pour tourner qui est implémentée par ledit algorithme est une fonction de sélection de direction au hasard.

5. Système de confinement de robot selon la revendication 4, dans lequel ladite direction choisie pour tourner qui est implémentée par ledit algorithme comprend en outre la rotation dans la même direction au moins deux fois avant qu'une direction de rotation finale soit choisie de façon aléatoire.

6. Système de confinement de robot selon la revendication 3, dans lequel la direction générale dans le sens des aiguilles d'une montre ou dans le sens contraire des aiguilles d'une montre comprenant la direction choisie de rotation qui est implémentée par ledit algorithme est basée sur la détection de niveaux de gradient de la barrière orientée formée par ledit faisceau (42) de confinement émis selon une pluralité d'orientations.

7. Système de confinement de robot selon la revendication 6, dans lequel la direction choisie de rotation qui est implémentée par ledit algorithme est la direction avec le plus faible niveau pour le faisceau (42) de confinement émis.

8. Système de confinement de robot selon la revendication 1, dans lequel ledit dispositif (30) portable d'émission de signal de barrière comprend en outre un émetteur secondaire (34) susceptible d'émettre un faisceau substantiellement omnidirectionnel.

9. Système de confinement de robot selon la revendication 1, dans lequel la barrière orientée formée par ledit faisceau de confinement émis par ledit émetteur primaire (32) est un signal modulé dans une fréquence infrarouge.

10. Système de confinement de robot selon la revendication 9, dans lequel le fonctionnement dudit détecteur (50) de barrière orientée est substantiellement omnidirectionnel.

11. Système de confinement de robot selon la revendication 10, dans lequel ledit robot mobile (20) comporte une coque (21) et dans lequel ledit détecteur (50) de barrière orientée est disposé au sommet de la coque (21) dudit robot (20) de sorte que le fonctionnement dudit détecteur (50) de barrière orientée n'est substantiellement pas affecté par la coque (21) dudit robot.

12. Système de confinement de robot selon la revendication 1, dans lequel ledit robot (20) comprend en outre une pluralité de détecteurs pour ladite barrière orientée.

13. Système de confinement de robot selon la revendication 1, dans lequel ledit dispositif (30) portable d'émission de signal de barrière comprend en outre un détecteur à réflexion, dans lequel ledit émetteur primaire (32) est susceptible d'émettre au moins un premier et un second faisceaux (42) de confinement, ledit émetteur primaire (32) étant susceptible d'émettre le second faisceau (42) de confinement lors de l'échec dudit détecteur à réflexion à détecter le premier faisceau (42) de confinement émis.

14. Système de confinement de robot selon la revendication 1, dans lequel le robot (20) a un rayon de braquage prédéterminé, et dans lequel ladite barrière orientée formée par ledit faisceau (42) de confinement émis, a une largeur au moins aussi grande que le rayon de braquage du robot.

15. Système de confinement de robot comprenant :
a) Un dispositif (30) portable d'émission de signal de barrière qui inclut au moins un émetteur primaire (32) **caractérisé en ce que** ledit émetteur primaire est susceptible d'émettre un faisceau (42) de confinement collimaté principalement le long d'un axe, ledit axe dudit faisceau (42) de confinement émis définissant une barrière orientée ;
b) un robot mobile (20) ;
c) ledit robot mobile (20) comprenant : un moyen pour tourner dans au moins une direction ; un détecteur (50) susceptible de détecter ladite barrière orientée formée par ledit faisceau (42) de confinement émis ; et une unité de commande commandant ledit moyen pour tourner ;
d) système dans lequel l'unité de commande fait tourner un algorithme pour éviter ladite barrière orientée formée par ledit faisceau (42) de confinement émis lors de la détection de ladite barrière orientée formée par ledit faisceau (42) de confinement émis, ledit algorithme étant susceptible d'inverser la direction dans laquelle le robot (20) s'est déplacé le plus récemment jusqu'à ce que ladite barrière orientée formée par ledit faisceau (42) de confinement émis ne soit plus détectée.

16. Procédé de confinement d'un robot (20) utilisant une barrière orientée, comprenant les étapes de :
a) fournir un dispositif (30) portable émettant un signal de barrière qui inclut un émetteur primaire **caractérisé en ce que** ledit émetteur primaire (32) est susceptible d'émettre un faisceau (42) de confinement collimaté le long d'un axe pour fournir ladite barrière orientée qui est principalement linéaire et qui peut diviser une zone en deux zones distinctes,
b) fournir un détecteur positionné sur le robot (20), ledit détecteur étant susceptible de détecter ladite barrière orientée formée par ledit faisceau (42) de confinement émis,
c) fournir un moyen de mobilité sur le robot, tel que le robot puisse tourner dans au moins une direction,
d) éviter ladite barrière orientée formée par ledit faisceau (42) de confinement émis lors de la détection, par ledit détecteur, de ladite barrière orientée formée par ledit faisceau (42) de confinement émis, en implémentant un algorithme pour déplacer le robot dans une direction choisie.

17. Procédé selon la revendication 16 dans lequel ladite barrière orientée formée par ledit faisceau (42) de confinement émis, émis par ledit émetteur primaire, est un signal modulé dans une fréquence infrarouge.

18. Procédé selon la revendication 17, dans lequel le fonctionnement dudit détecteur de barrière orientée est substantiellement omnidirectionnel.

19. Procédé selon la revendication 18, dans lequel le robot (20) a un rayon de braquage prédéterminé et dans lequel ladite barrière orientée formée par ledit faisceau (42) de confinement émis a une largeur au moins aussi grande que le rayon de braquage du robot (20).
